# EUROPEAN PATENT SPECIFICATION

(11) **EP 1 060 060 B1**
(45) Date of publication and mention of the grant of the patent: **18.09.2002**
(21) Application number: 99907973.4
(22) Date of filing: 04.03.1999
(51) Int. Cl.: B27B 5/16

(54) **ROLLER TABLE DEVICE FOR CARPENTER'S AND JOINER'S POWER SAW**
ROLLENGEFÜHRTER TISCH FÜR UNTERKREISSÄGE
TABLE A ROULEAUX POUR SCIE DE MENUISIER

(30) Priority: 06.03.1998 NO 981011
(43) Date of publication of application: 20.12.2000
(73) Proprietor: Ernex AS, 1790 Tistedal (NO)
(72) Inventor: HANSEN, Jan, N-1796 Kornsj (NO)
(74) Representative: Popp, Eugen, Dr.
(86) International application number: NO9900074
(87) International publication number: WO99044794

(56) References cited:
- EP-A2- 0 117 505
- WO-A1-97/01421
- DE-A1- 3 506 783

## Description

The invention concerns a roller table device for carpenter's and joiner's power saws which has a stand with a tabletop, and mounted in the stand a saw blade which is arranged to project up through the tabletop, comprising a rail which is arranged to be attached to the stand, thereby extending parallel to the tabletop's upper surface and supporting an end portion of a roller table, thus enabling the roller table to be moved in its transverse direction along the rail, and two brackets for attachment to the stand, the rail being connected to the brackets via respective adjustment devices for adjusting the rail in the height direction relative to the brackets.

In, e.g., EP 0 117 505 there is disclosed a device essentially of the above-mentioned type, but where a considerable part of the height adjustment device for the rail remains attached to the stand after the rail has been removed therefrom. A removal of the rail from the stand, e.g. in connection with moving the saw, causes the latter to remain unnecessarily heavy and space consuming and moving becomes a time-wasting process. In addition the height adjustment device is complicated, involving a great many screws.

The object of the invention is to provide a device of the above-mentioned type which is not encumbered by the above-mentioned disadvantages.

This object is achieved with a roller table device according to the invention with the characteristic features indicated in the claim.

The invention will now be described in more detail with reference to the drawing which schematically illustrates embodiments of the device according to the invention.

Fig. 1 is a perspective view of a carpenter's and joiner's power saw according to the invention.

Fig. 2 is a perspective view of a portion of the carpenter's and joiner's power saw which is illustrated in fig. 1, viewed in the direction of the arrow A, i.e. from the side of the power saw which is arranged to face a roller table, which may be employed in connection with the power saw.

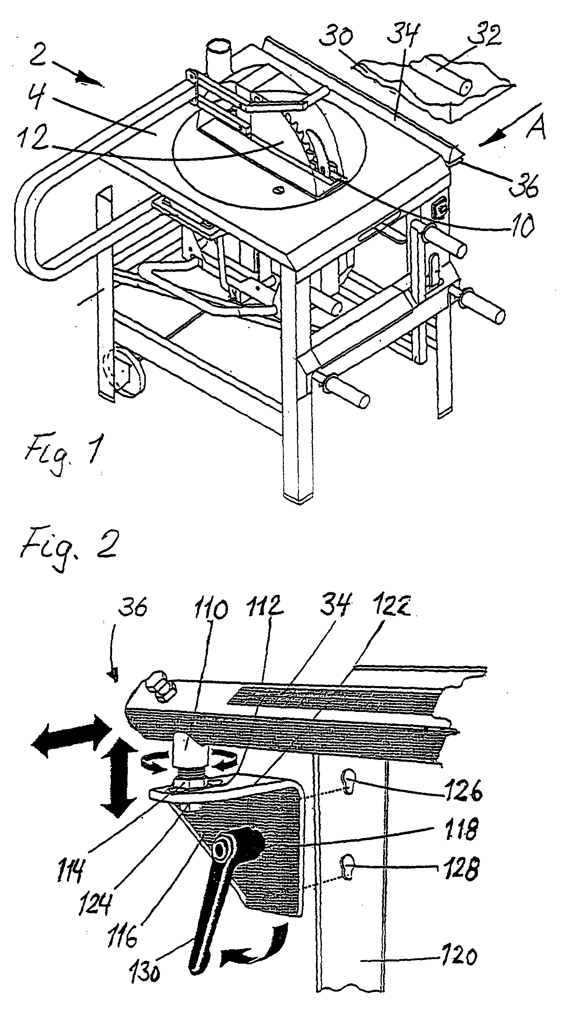

As illustrated in fig. 1, a carpenter's and joiner's power saw according to the invention comprises a stand 2 with a tabletop 4. In the tabletop there is provided a slot 10. A saw blade 12 is arranged to be moved up and down in the slot 10.

At one side of the stand there is provided a horizontally extending roller table 30, with a number of freely rotatable rollers 32 on which the materials which have to be sawn can rest. The end of the roller table 30 which faces the stand 2 is arranged to rest slidably on a rail 34, which extends parallel to a lateral edge of the tabletop 4, and which by means of an adjustment device 36 can be set in the vertical direction for adjustment of the roller table, thus enabling the materials which have to be sawn to be moved towards the saw blade at the correct height, and they may also rest on the tabletop 4.

Fig. 2 illustrates the adjustment device 36 for the rail 34.

To each end portion of the rail 34 there is attached a downwardly projecting, externally threaded pin or screw 110, on to which there is screwed a nut 114.

To the stand 2 and under each end of the rail 34 there is attached an angular bracket 116 with a vertical portion 118 which is arranged to abut against a vertically extending portion 120 of the stand 2, and with a horizontal portion 122. In the horizontal portion 122 there is provided a through-going, elongated hole or slot 112 which extends perpendicularly towards the vertical portion. The nut 114 can rest with its radially external portion against the slot's edge portions. A holder device in the form of a fixing screw 124 on to which there is threaded a disc (not shown), extends through the slot from below and is screwed into a central, threaded hole of the pin 110, the disc being similarly arranged to abut against the slot's edges. A person skilled in the art will understand that instead of a fixing screw 124 which is screwed into the screw 110, a different holder device from the fixing screw 124 may be employed, such as a counter nut (not shown) which is screwed on to an end portion of the screw 110 which projects out of the hole 112 on the underside of the horizontal portion 122.

In the vertically extending portion 120 of the stand there are provided two keyhole-like holes 126 and 128. On the side of the vertically extending portion 118 of the angular bracket 116 which faces the stand 2, the angular bracket 116 has two pins, each of which has a narrow portion and a head (not shown). The head can be inserted in the wide portion of the holes 126, 128, and by lowering the bracket the narrow portion of the pins can extend through the narrow portion of the holes. The bracket carries a securing device in the form of a handle 130 with a screw (not shown) which is screwed into a threaded hole which is provided in the vertical portion 118 of the angular bracket 116. When the pins have been inserted in the respective holes 126, 128, the handle 130 can be rotated, whereby its screw is pressed against the stand's vertical portion 120, thereby locking the angular bracket thereto.

An adjustment of the rail 34 in the height direction can be performed by loosening the fixing screw 124. The nut is then rotated on the pin 110 whereby the rail is moved either up or down. When the desired position of the rail has been attained, the fixing screw 124 is tightened once again.

Adjustment of the rail 34 in the direction towards and away from the tabletop 4 can be achieved in a similar manner by loosening the fixing screw 124, moving the pin 110 along the slot 112 until the rail is located in a desired position, and renewed tightening of the fixing screw 124.

It will be understood that the rail 34 and its adjustment device 36 may easily be removed from the stand by releasing the angular brackets 116 from the stand. In the same way the rail 34 can equally easily be attached to the stand by renewed attachment of the brackets thereto without the relative position of the adjustment device's components being altered.

## Claims

1. A roller table device for carpenter's and joiner's power saws which has a stand (2) with a tabletop (4), and mounted in the stand (2) a saw blade (12) which is arranged to project up through the tabletop (4), comprising a rail (34) which is arranged to be attached to the stand (2), thereby extending parallel to the tabletop's (4) upper surface and supporting an end portion of a roller table (30), thus enabling the roller table to be moved in its transverse direction along the rail (34), and two brackets (116) for attachment to the stand (2), the rail (34) being connected to the brackets (116) via respective adjustment devices (110,112,114) for adjusting the rail (34) in the height direction relative to the brackets (116),
**characterized in that** each adjustment device (110,112,114) comprises a screw (110), which is securely connected to the rail (34), extending across its longitudinal direction and arranged to be inserted in a hole (112) which is provided in a flange of the associated bracket (116), and to be adjusted in its longitudinal direction relative to the bracket (116) by means of a nut (114) which is screwed on to the screw (110), forming an abutment against a side of the flange, there being screwed on to the screw (110) a counter nut which is arranged to abut against the other side of the flange, and the bracket (116) has two flange portions (118, 122) extending at an angle to each other, where one portion (118) has at least one pin extending away therefrom with a head at its free end, and the stand (2) has an associated hole (126, 128) in the form of a keyhole with an upper enlarged portion and extending below in connection thereto, a narrow portion, the diameter of the enlarged portion of the hole being slightly larger than the diameter of the head, and the pin is arranged to be inserted in the hole (126, 128) and to be lowered, with the result that its head is facing the sides of the narrow portion, and the bracket (116) has a securing device (130) whereby it can be forced away from the stand (2) in the pin's longitudinal direction when the pin has been inserted in the hole in this manner.

2. A roller table device according to claim 1,
**characterized in that** the hole (112) in the bracket (116) is a long hole, whereby the screw (110) can be adjusted in its transverse direction relative to the bracket (116).

## Patentansprüche

1. Rolltischvorrichtung für elektrische Zimmerer- oder Schreinersägen, die
ein Gestell (2) mit einer Tischplatte (4), und in dem Gestell (2) angebracht ein Sägeblatt (12) aufweist, das so angeordnet ist, dass es nach oben durch die Tischplatte (4) vorspringt, eine Schiene (34) umfassend, die angeordnet ist, dass sie so am Gestell (2) befestigt ist, dass sie sich dadurch parallel zur oberen Oberfläche der Tischplatte (4) erstreckt und einen Endabschnitt eines Rolltisches (30) haltert, wodurch der Rolltisch entlang der Schiene (34) in seiner Querrichtung bewegt werden kann, und zwei Auflagen (116) zur Befestigung am Gestell (2), wobei die Schiene (34) mit den Auflagen (116) über jeweilige Einstellvorrichtungen (110, 112, 114) verbunden ist, um die Schiene (34) bezüglich der Auflagen (116) in der Höhenrichtung zu verstellen,
**dadurch gekennzeichnet, dass** jede Einstellvorrichtung (110, 112, 114) eine Schraube (110) umfasst, die fest mit der Schiene (34) verbunden ist und sich über deren Längsrichtung erstreckt und angeordnet ist, um in ein Loch (112) eingeführt zu werden, das in einem Flansch der dazugehörigen Auflage (116) angeordnet ist, und um in ihrer Längsrichtung bezüglich der Auflage (116) mittels einer Schraubenmutter (114) eingestellt zu werden, die auf die Schraube (110) aufgeschraubt ist und ein Widerlager gegen eine Seite des Flansches bildet, wo sie auf die Schraube (110) aufgeschraubt wird, eine Gegenmutter, die so angeordnet ist, dass sie an der anderen Seite des Flansches anliegt, und dass die Auflage (116) zwei Flanschabschnitte (118, 122) aufweist, die sich in einem Winkel zueinander erstrecken, wobei ein Abschnitt (118) mindestens einen Stift aufweist, der sich mit einem Kopf an seinem freien Ende davon weg erstreckt, und dass das Gestell (2) ein dazugehöriges Loch (126, 128) in der Form eines Schlüssellochs mit einem oberen vergrößerteren Abschnitt und einen sich darunter erstreckenden, damit verbundenen schmalen Abschnitt aufweist, wobei der Durchmesser des vergrößerteren Abschnitts des Loches etwas größer ist als der Durchmesser des Kopfes, und der Stift dazu angeordnet ist, in das Loch (126, 128) gesteckt und gesenkt zu werden, mit dem Ergebnis, dass sein Kopf den Seiten des schmalen Abschnitts zugewandt ist, und dass die Auflage (116) eine Feststellvorrichtung (130) aufweist, wodurch sie vom Gestell (2) in der Längsrichtung des Stifts weggedrückt werden kann, wenn der Stift auf diese Weise in das Loch eingeführt wurde.

2. Rolltischvorrichtung nach Anspruch 1,
**dadurch gekennzeichnet, dass** das Loch (112) in der Auflage (116) ein Langloch ist, wodurch die Schraube (110) in ihrer Querrichtung bezüglich der Auflage (116) verstellt werden kann.

## Revendications

1. Dispositif pour table à rouleaux pour scies mécaniques de charpentier ou de menuisier qui présente un montant (2) muni d'une tablette (4) et montée sur le montant (2), une lame (12) de scie qui est disposée de façon à se prolonger à travers la tablette (4), comprenant un rail (34) qui est disposé de façon à être fixé au montant (2), s'étendant de ce fait parallèlement à la surface supérieure de la tablette (4) et soutenant une portion terminale d'une table à rouleaux (30), permettant ainsi à 1a table à rouleaux d'être déplacée transversalement le long du rail (34), et deux crochets (116) pour la fixation au montant (2), le rail (34) étant relié aux crochets (116) au moyen de dispositifs de réglage respectifs (110, 112, 114) permettant de régler la hauteur du rail (34) par rapport aux crochets (116),
**caractérisé en ce que** chacun des dispositifs de réglage (110, 112, 114) comprend une vis (110), assujettie au rail (34), s'étendant le long de sa longueur et aménagée pour être insérée dans un trou (112) qui est pratiqué dans une bride du crochet correspondant (116), et pour être réglée dans le sens longitudinal par rapport au crochet (116) au moyen d'un écrou (114) qui est vissé sur la vis (110), formant une butée contre un côté de la bride, un contre-écrou étant vissé sur la vis (110), lequel contre-écrou est disposé de façon à buter contre l'autre côté de la bride, et 1c crochet (116) présente deux portions de bride (118, 122) s'étendant séparées par un angle, où une portion (118) présente au moins une broche dépassant de ladite portion et munie d'une tête à son extrémité libre, et le montant (2) présente un trou correspondant (126, 128) sous la forme d'un trou de serrure présentant une portion supérieure élargie et, s'étendant directement au-dessous, une portion étroite, le diamètre de la portion élargie du trou étant légèrement plus grand que le diamètre de la tête, et 1a broche est aménagée pour être insérée dans le trou (126, 128) et pour être abaissée, en conséquence de quoi sa tête fait face aux côtés de la portion étroite, et le crochet (116) présente un dispositif d'arrêt (130) moyennant quoi il peut être extrait du montant (2) dans le sens longitudinal de la broche lorsque la broche a été insérée dans le trou de cette manière.

2. Dispositif pour table à rouleaux conformément à la revendication 1,
**caractérisé en ce que** le trou (112) pratiqué dans le crochet (116) est un trou long, moyennant quoi la vis (110) peut être réglée dans le sens transversal par rapport au crochet (116).
